# EUROPÄISCHE PATENTANMELDUNG

(11) **EP 2 422 955 A2**
(43) Veröffentlichungstag der Anmeldung: **29.02.2012**
(21) Anmeldenummer: 11174333.2
(22) Anmeldetag: 18.07.2011
(51) Int. Cl.: B29C 49/56, B29C 49/48

(54) **Blasform**

(30) Priorität: 26.08.2010 DE 102010039803
(71) Anmelder: Krones AG, 93073 Neutraubling (DE)
(72) Erfinder: Stoiber, Christian, 93185 Michelsneukirchen (DE)
(74) Vertreter: Grünecker, Kinkeldey, Stockmair & Schwanhäusser

(57) **Zusammenfassung**

In einer Blasform (F), mit einer feststehenden Formhälfte (1) und einer dazu relativ zwischen Schließ- und Offenstellungen bewegbaren weiteren Formhälfte (2), einer eine im Wesentlichen zur Bewegungsrichtung der weiteren Formhälfte (2) senkrechte Bodenformachse (X) aufweisende Bodenform (7), die zwischen einer Eingriffsstellung und einer Entformstellung relativ zu den Formhälften (1, 2) bewegbar und in der Eingriffsstellung und in der Schließstellung der weiteren Formhälfte (2) über wenigstens ein zur Bewegungsrichtung der weiteren Formhälfte (2) paralleles kragenartiges Eingriffselement (E) an der Bodenform (7) und eine ringnutartige Gegeneingriffsstruktur (G) in den Formhälften (1, 2) mit den Formhälften (1, 2) zumindest formschlüssig verriegelbar ist, bilden das Eingriffselement (E) und zumindest die Gegeneingriffsstruktur (G) in der feststehenden Formhälfte (1) einen Bajonettverschluss (B), der durch relative Drehbewegungen des Eingriffselementes (E) um die Bodenformachse (X) und nur lineare Relativbewegungen in Richtung der Bodenformachse (X) betätigbar ist.

## Beschreibung

Die Erfindung betrifft eine Blasform gemäß Oberbegriff des Patentanspruchs 1.

Bei einer aus den Fig. 5 bis 8 der DE 10 2007 022 638 A bekannten Blasform ist das Eingriffselement an der Bodenform ein in Umfangsrichtung kontinuierlicher Ringkragen, der vom Umfang der Bodenform nach außen vorsteht und in Eingriffsstellung der Bodenform und der Schließstellung der Formhälften in die als Umfangsnut in beiden Formhälften ausgebildete Gegeneingriffsstruktur formschlüssig eingreift und die Bodenform mit den Formhälften verriegelt. Die Formhälften werden in der Schließstellung beispielsweise durch Verriegelungseinrichtungen für Formhälften-Träger blockiert, so dass die Blasform hohen Innendrücken von beispielsweise oftmals mehr als 40 x 10⁵ Pa widersteht. Der Überstand des Ringkragens an der Bodenform bedingt die Bodenform bei geöffneter Blasform sowohl bei der linearen Bewegung aus der Entformstellung in die Eingriffsstellung als auch umgekehrt jeweils zweimal quer zur Bodenformachse zu verlagern, damit die Bodenform in die feststehende Formhälfte einführbar oder aus dieser herausziehbar ist. Der Bewegungsantrieb für die Bodenform muss komplexe Bewegungen ausführen, die bei hohen Taktzahlen nachteilig sind. Ferner muss der hergestellte Behälter, dessen Boden in der Bodenform sitzt, bei der Querbewegung der Bodenform mitgeführt werden. Beide Bewegungsabläufe bedingen es auch, dass vor der Bewegung der Bodenform in die Entformstellung die weitere Formhälfte zumindest zum Teil zur Offenstellung bewegt sein muss, da zwischen der Entformung der Bodenform und dem Öffnungswinkel oder Öffnungsgrad der Formhälften eine bestimmte Abhängigkeit steuerungstechnisch zu berücksichtigen ist. Es erfolgen sehr rasche und komplexe Bewegungen, die, da sie einander überlagern, sehr präzise gesteuert werden müssen, und aufwändige und viel Bauraum beanspruchende Bewegungsantriebe erfordern.

Auch bei einer aus DE 10 2009 008 632 A bekannten Blasform lässt sich der Bodenform-Teil bei weitestgehend geschlossenen Formhälften nicht mehr einfahren und verdrehen oder verdrehen und herausziehen. Vielmehr sind hierbei weitere Querbewegungen erforderlich, da Freiräume zum Verschieben von Bajonettelementen fehlen.

Zusätzlicher Stand der Technik ist zu finden in: DE 603 08 207 T2 und US 2006/0078643 A.

Der Erfindung liegt die Aufgabe zugrunde, eine Blasform grundsätzlich hinsichtlich der Bodenformverriegelung und z.B. auch dahingehend zu verbessern, dass trotz einer feststehenden

Formhälfte eine einfache Bewegung der Bodenform zwischen der Eingriffsstellung und der Entformstellung möglich ist.

Die gestellte Aufgabe wird mit den Merkmalen des Patentanspruchs 1 gelöst.

Der erfindungsgemäß zwischen zumindest einer Formhälfte und der Bodenform gebildete Bajonettverschluss ist grundsätzlich und besonders im Fall einer feststehenden Formhälfte in einem sehr einfachen Bewegungsablauf betätigbar. Der Bajonettverschluss erfordert zum Verriegeln und Lösen jeweils nur eine relative Drehbewegung des Eingriffselementes um die Bodenformachse zumindest relativ zur feststehenden Formhälfte, und braucht bei gelöstem Bajonettverschluss nur eine lineare Bewegung der Bodenform in Richtung der Bodenformachse. Es ist auf diese Weise eine einfache, sozusagen punkt- oder linienförmige Entformbewegung möglich. Umgekehrt lässt sich die Bodenform auch ohne Querbewegungen relativ zur Bodenformachse linear in die Eingriffsstellung bringen, ehe der Bajonettverschluss durch eine relative Drehbewegung um die Bodenformachse verriegelt wird. Die relative Löseverdrehung des Eingriffselementes kann gleichzeitig mit dem Entriegeln des Formträgers erfolgen, der die Formhälften zuvor gegeneinander presste. Die lineare Entformbewegung der Bodenform kann ebenfalls sofort beginnen oder schon in der Anfangsphase der Öffnungsbewegung der Formhälften erfolgen. Dadurch steht für die Entformbewegung der Bodenform anteilig pro Arbeitszyklus mehr Zeit zur Verfügung, was bedeutet, dass die Bodenform-Entformbewegung langsamer abläuft und einfach gesteuert werden kann, was bei kurzen Zykluszeiten von Vorteil ist. Auch für die Verriegelung der Bodenform kann Zeit eingespart werden, da die einfachen Bewegungen, falls sie schnell genug ausgeführt werden, kürzer dauern als komplexe Bewegungsabläufe mit einander überlagerten Linear- und Querbewegungen relativ zur Bodenformachse. Das Eingriffselement lässt sich beim Entformungsschritt bereits dann verdrehen, wenn die Formhälften entriegelt sind, ohne dass sich die weitere Formhälfte schon nennenswert von der feststehenden Formhälfte wegbewegt hat. Nach der relativen Lösedrehbewegung des Eingriffselementes ist die Bodenform sofort frei, um durch die einfache lineare Bewegung in Richtung der Bodenformachse in die Entformstellung bewegt zu werden.

Der Bajonettverschluss zwischen der Bodenform und zumindest der feststehenden Formhälfte gestattet das Entformen mit nur einer relativen Drehbewegung des Eingriffselementes und einer linearen Bewegung der Bodenform, wenn die weitere Formhälfte ohnedies vor dem Entformen des hergestellten Behälters in die Offenstellung bewegt ist, so dass das Eingriffselement von der weiteren Formhälfte durch die Bewegung der weiteren Formhälfte frei kommt. Um jedoch den Entformvorgang der Bodenform möglichst frühzeitig beginnen und durchführen zu können, z.B. sobald die Formhälften vom Schließdruck entlastet sind, ist es zweckmäßig, auch zwischen dem Eingriffselement und auch der weiteren Formhälfte einen Bajonettverschluss vorzusehen, der in gleicher Weise betätigbar ist, wie der Bajonettverschluss zwischen der Bodenform und der feststehenden Formhälfte. Der Entformvorgang der Bodenform kann dann ablaufen, sobald die Formhälften vom Schließdruck entlastet sind bzw. die weitere Formhälfte beginnt, sich wegzubewegen, ohne schon die volle Offenstellung erreicht zu haben.

Bei einer zweckmäßigen Ausführungsform ist das Eingriffselement fest an der Bodenform angeordnet und wird das Eingriffselement zusammen mit der Bodenform um die Bodenformachse verdreht. Die ermöglicht eine einfache Bodenform und einen einfachen Bewegungsantrieb hierfür.

Bei einer besonders zweckmäßigen Ausführungsform ist hingegen das Eingriffselement an der Bodenform relativ zu dieser um die Bodenformachse drehbar angeordnet, so dass der Entformvorgang (wie auch der Verriegelungsvorgang) ohne relative Drehbewegung der Bodenform selbst durchführbar ist. Für die Betätigung des Bajonettverschlusses reicht so ein relativ moderates Drehmoment aus.

Bei einer zweckmäßigen Ausführungsform weist das Eingriffselement der Bodenform in Umfangsrichtung Unterbrechungen zwischen einzelnen Kragensegmenten auf. Die Kragensegmente stehen gegenüber dem Umfang der Bodenform nach außen vor und stellen den Formschluss mit der Gegeneingriffsstruktur zumindest der feststehenden Formhälfte her. In zumindest der feststehenden Formhälfte, vorzugsweise auch in der weiteren Formhälfte, ist wenigstens eine auf die Größe und den Überstand wenigstens eines Kragensegmentes abgestimmte Freistellung ausgebildet, die sich ausgehend von der Gegeneingriffsstruktur linear in Bewegungsrichtung der Bodenform in die oder aus der in Formstellung bis zu einem Ende der Formhälfte erstreckt. Ist der Bajonettverschluss entriegelt, d.h., ist das jeweilige Kragensegment auf die Freistellung ausgerichtet, dann lässt sich die Bodenform mit dem Kragensegment sofort durch die Freistellung linear in Richtung der Bodenformachse bewegen. Dieses Konzept ist von grundsätzlicher Bedeutung, weil sich die Bodenform nicht nur linear unter Nutzen der Freistellungen in eine und aus einer feststehenden Formhälfte bewegen lässt, sondern auch im Falle zweier relativ beweglicher Formhälften vorteilhaft ist, weil die lineare Bodenformbewegung vollständig unabhängig von den Formhälften- bzw. Formträgerhälften-Bewegungen durchführbar ist. Es sind voneinander unabhängige kinematische Abfolgen der Bodenformbewegungen und der Formhälftenbewegungen bereits wegen des Bajonettverschlusses mehrmals mit den axial bzw. linear verlaufenden Freistellungen realisierbar. So könnten mittels der Formträgerhälften die Formhälften schon geschlossen und erst dann die Bodenform linear eingefahren werden, und umgekehrt. Daraus resultiert wegen geringerer zu übertragender Leistung, z.B. geringerer Verschleiß, an einer Bodenform-Hubkurve des Antriebsmechanismus, da mehr Zeit für die Bodenformbewegung zur Verfügung steht, wenn die Formhälften-Bewegungen oder - Bewegungszyklen keine Zeitvorgabe für die Bodenformbewegung definieren. Die Bodenform braucht für den Formvorgang eigentlich erst an Ort und Stelle in der Blasform zu sein, wenn der geblasene Behälter im Begriff ist, die Bodenform zu kontaktieren. Dieser Zeitpunkt liegt jedoch zeitlich weit nach dem Schließen der Blasform. Das Bajonettverschluss-Konzept mit den Freistellungen ist somit wegen der dadurch möglichen Funktionstrennung unabhängig davon vorteilhaft, ob eine feststehende oder keine feststehende Formhälfte vorgesehen ist.

Um einen eindeutigen Formschluss, gegebenenfalls unterstützt durch einen Kraftschluss über den Schließdruck der Formhälften, zu erzielen, ist es zweckmäßig, wenn das Kragensegment als Prismenringsteg ausgebildet ist. Die Gegeneingriffsstruktur in der jeweiligen Formhälfte ist dann eine einfache Umfangsnut mit prismatischem, in Umfangsrichtung gleichbleibendem Querschnitt. Die zum einen Ende der Formhälfte weisende Nutflanke der Umfangsnut wird durch die jeweilige Freistellung unterbrochen, um das Kragensegment passieren zu lassen.

Eine zweckmäßige Ausführungsform, bei der das Eingriffselement relativ zur Bodenform um die Bodenformachse verdrehbar ist, weist die Kragensegmente, vorzugsweise als Teil einer Ringscheibe, drehbar geführt in einer Umfangsnut der Bodenform auf. Das jeweilige Kragensegment ist mit einer Stellwelle gekoppelt, die im Inneren der Bodenform drehbar gelagert ist. Die Stellwelle kann unterhalb der Bodenform ein zugängliches Drehbetätigungsende aufweisen, vorzugsweise einen Kurbelarm mit einem Mitnehmer, an welchem der Bewegungsmechanismus zumindest zum Verdrehen des Eingriffselementes angreifen kann. Dies ermöglicht eine baulich einfache Ausbildung der Bodenform mit dem Eingriffselement. Der Bewegungsmechanismus kann auch die Linearbewegungen steuern. Alternativ kann hierfür ein eigener Bewegungsmechanismus dienen.

Zweckmäßig ist ferner in der Bodenform, vorzugsweise in oder innerhalb der Umfangsnut zwischen einem Unterteil der Bodenform und einem damit verschraubten Oberteil, zumindest ein Drehbegrenzungsanschlag für die Drehbewegung der Kragensegmente relativ zur Bodenform um die Bodenformachse vorgesehen. Dieser Drehbegrenzungsanschlag kann beispielsweise die Verbindung, z.B. eine Verschraubung, zwischen dem Unterteil und dem Oberteil der Bodenform sein, die hier eine Zusatzfunktion erfüllt, weil sie exakt vorgegebene relative Drehstellungen der Kragensegmente festlegt, die einerseits für die effiziente, präzise reproduzierbare Verriegelung der Bodenform mit den Formhälften und andererseits für die exakte Drehpositionierung der Kragensegmente für den Entformvorgang wichtig sind. Die Aufgabe der Drehpositionierung könnte alternativ aber auch vom Bewegungsmechanismus der Bodenform bzw. der Kragensegmente übernommen werden, oder von einem Anschlag in der Gegeneingriffsstruktur.

Bei einer zweckmäßigen Ausführungsform sind pro Formhälfte für zwei Kragensegmente zwei Freistellungen vorgesehen. Die Kragensegmente und die Freistellungen haben, wie auch die Unterbrechungen zwischen den Kragensegmenten, in etwa untereinander gleiche Umfangserstreckungen, um im verriegelten Zustand über den Umfang relativ gleichmäßige Tragverhältnisse zu gewährleisten. Dabei können die Freistellungen in jeder Formhälfte etwa gleich weit von einer Formtrennebene der Formhälften beabstandet sein. Dies bietet den Vorteil, dass in verriegeltem Zustand zumindest ein Kragensegment die Formtrennhälfte tragend überbrückt. Eine umgekehrte Auslegung ist ebenso möglich, d.h., dass dann zumindest eine Freistellung die Formtrennhälfte überbrückt.

Um bei der Bewegung der Bodenform in die Eingriffsstellung aufgrund Vibrationen oder Fehlausrichtungen ein Verhängen des Kragensegmentes zu vermeiden, kann es zweckmäßig sein, in jeder Freistellung an dem einen Ende der Formhälfte eine Einführschräge vorzusehen, damit das Kragensegment trotz Fehlausrichtung sauber eingeführt wird.

Anhand der Zeichnungen werden Ausführungsformen des Erfindungsgegenstandes erläutert. Es zeigen:
- Fig. 1: eine schematische Perspektivdarstellung einer Blasform, wobei sich Formhälften in einer Offenstellung und eine Bodenform in einer Entformstellung befinden,
- Fig. 2: eine Perspektivansicht der Blasform, teilweise aufgeschnitten, wobei sich die Formhälften in der Schließstellung befinden, und die Bodenform in Begriff ist, ihre Eingriffsstellung einzunehmen,
- Fig. 3: eine Perspektivdarstellung der Blasform, der Klarheit teilweise aufgeschnitten, wobei die Formhälften in der Schließstellung und die Bodenform in der Verriegelungsstellung sind, und
- Fig. 4: eine Perspektivdarstellung der Blasform, teilweise aufgeschnitten, wobei die Formhälften noch in der Schließstellung, gegebenenfalls ohne Schließdruck, sind oder eine Formhälfte begriffen ist, sich von der anderen Formhälfte wegzubewegen, und die Bodenform in Begriff ist, sich in die Entformstellung zu bewegen.

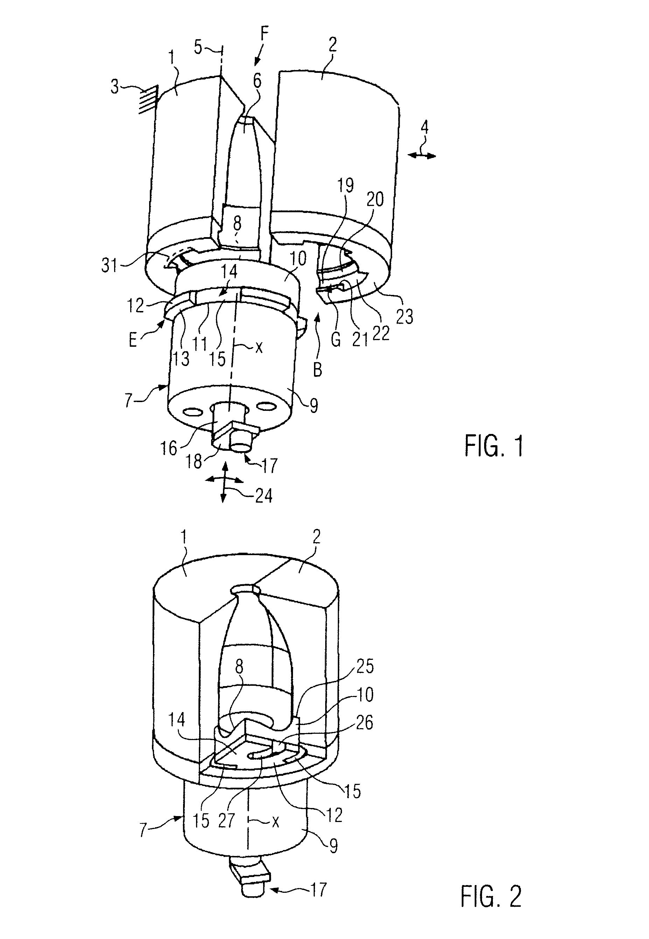

Eine Blasform F in Fig. 1 beispielsweise zum Herstellen von Behältern aus Preforms in einem Blasvorgang oder einem Streckblasvorgang ist in einer nicht gezeigten Blasstation einer Blasformmaschine installiert. Die Blasform F ist dabei ohne üblicherweise vorgesehene Formträgereinrichtungen gezeigt und weist als Hauptbestandteile eine feststehende Formhälfte 1 (auch Formschale genannt) und eine weitere relativ zur feststehenden Formhälfte 1 bewegliche Formhälfte 2 auf. Die bewegliche Formhälfte 2 kann um eine nicht gezeigte Achse aufgeklappt oder linear (wie angedeutet) mittels eines nicht näher hervorgehobenen Bewegungsantriebes 4 bewegt werden. Die Formhälften 1, 2 sind in einer Schließstellung der weiteren Formhälfte 2 in einer Formtrennebene 5 schließbar, und beispielsweise über die nicht gezeigten Formträgereinrichtungen unter Schließdruck aneinander verriegelbar. Die feststehende Formhälfte 1 ist beispielsweise in einer Abstützung 3 festgelegt.

Eine Bodenform 7 ist eine weitere Komponente und dient mit ihrer Oberseite 8 zur Begrenzung eines Formhohlraums 6 der Blasform F, in den ein Preform eingebracht und dann ausgeformt wird. An der Bodenform 7 ist wenigstens ein ringkragenartiges, nach außen vorstehendes Eingriffselement E hier im Wesentlichen in einer Ebene parallel zur Bewegungsrichtung der weiteren Formhälfte 2 vorgesehen, das zum Verriegeln der Bodenform 7 mit den Formhälften 1, 2 dient. Die Bodenform 7 kann mit dem Eingriffselement E einstückig ausgebildet sein, und sowohl drehbar als auch linear in Richtung einer Bodenformachse X bewegbar sein.

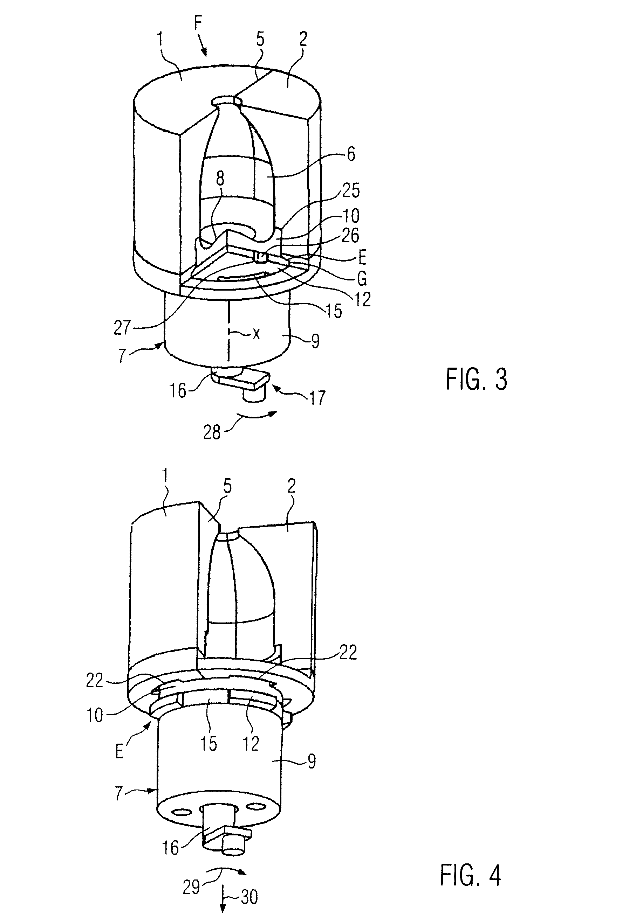

In der gezeigten Ausführungsform besteht jedoch die Bodenform 7 aus einem Unterteil 9 und einem damit verbundenen Oberteil 10 (beispielsweise verbunden über eine Schraubverbindung (Fig. 2 und 3)). Das Eingriffselement E ist in Fig. 1 beispielsweise eine Ringscheibe 14, die in einer Umfangsnut 11 der Bodenform 7 (zwischen dem Unterteil 9 und dem Oberteil 10) um die Bodenformachse X drehbar geführt ist. Die Bodenformachse X kann der Mittelachse des Formhohlraums 6 entsprechen. Das Eingriffselement E besteht aus in Umfangsrichtung abwechselnden, vorstehenden Kragensegmenten 12 und Unterbrechungen 15, die untereinander gleiche Umfangsabmessungen haben können, jedoch nicht müssen, und beispielsweise regelmäßig angeordnet sind. Jedes Kragensegment 12 ist zweckmäßig ein Prismenringsteg mit prismatischem Querschnitt und abgeschrägten Flanken 13. Jede Unterbrechung 15 kann gegenüber dem Außenumfang der Bodenform 7 zurücktreten. Die die Kragensegmente 12 und die Unterbrechungen 15 aufweisende Ringscheibe 14 ist mit einer Stellwelle 16 gekoppelt, die beispielsweise um die Bodenformachse X innen in der Bodenform 7 drehbar angeordnet ist und mit ihrem unteren Ende aus der Bodenform 7 vorsteht und dort ein Betätigungsende 17 aufweist, beispielsweise einen Kurbelarm 18 mit einem Mitnehmer zum Angriff eines Bewegungsantriebs 24 für die Bodenform 7. Der Bewegungsantrieb 24 kann dabei angreifend an der Betätigungshandhabe 17 sowohl im Wesentlichen reine axiale Linearbewegungen in Richtung der Bodenformachse X als auch relative Drehbewegungen um die Bodenformachse X aufbringen. Alternativ könnte der Bewegungsantrieb 24 auch so gestaltet sein, dass die lineare Bewegung der Bodenform 7 in Richtung der Bodenformachse X und die relative Drehbewegung der Stellwelle 16 um die Bodenformachse X getrennt aufgebracht werden.

In den Formhälften 1, 2 ist innenseitig für das Eingriffselement E der Bodenform 7 eine Gegeneingriffsstruktur G vorgesehen. Diese Gegeneingriffsstruktur G ist beispielsweise eine mit gleichbleibendem Querschnitt umlaufende Umfangsnut 19, wobei deren Querschnitt an den Querschnitt jedes Kragensegmentes 12 angepasst ist. So hat die Umfangsnut 19 beispielsweise einen prismatischen Querschnitt mit abgeschrägten Flanken 20 und 21. Ausgehend von jeweils einer Unterbrechung in der Flanke 21 erstreckt sich von der Gegeneingriffsstruktur G zumindest der feststehenden Formhälfte 1, zweckmäßig auch der weiteren Formhälfte 2, jeweils zumindest eine Freistellung 22 bis zum zur Bodenform 7 weisenden Ende 23 jeder Formhälfte 1, 2. Die Freistellung 22 entspricht in der Größe und der Abmessung der Größe und der Umfangsabmessung eines Kragensegmentes 12, oder ist geringfügig größer als ein Kragensegment 12. Der Verlauf der Freistellung 22 ist linear und parallel zur Bodenformachse X.

Die in Fig. 1 in ihrer Offenstellung gezeigte weitere Formhälfte 2 ist (siehe Fig. 2) durch den Bewegungsantrieb 4 in eine Schließstellung mit der feststehenden Formhälfte 1 verstellbar, und dann mit einem Schließdruck beaufschlagbar bzw. unter Schließdruck mit der Formhälfte 1 verriegelbar. Die Bodenform 7 ist aus der in Fig. 1 gezeigten Entformstellung, hier sogar unterhalb des Endes 23 der Formhälften 1, 2, in eine in Fig. 2 angedeutete Eingriffsstellung in Richtung der Bodenformachse X überführbar und, zweckmäßig ehe die Formhälften 1, 2 in der Schließstellung unter Schließdruck verriegelt werden, über das Eingriffselement E mit der Gegeneingriffsstruktur G verriegelbar.

In Fig. 2 hat die Bodenform 7 bereits ihre Eingriffsstellung erreicht, d.h., jedes Kragensegment 12 ist durch die Freistellung 22 bis in die Ringnut 19 eingetreten, wobei die Unterbrechungen 15 noch der Nutflanke 21 gegenüberliegen. 26 deutet in Fig. 2 beispielsweise einen Drehbegrenzungsanschlag an, der von einer Verbindungsschraube zwischen dem Unterteil 9 und dem Oberteil 10 definiert sein kann, und der mit einem Schlitz 27 in der Ringscheibe 14 zusammenwirkt. In der in Fig. 2 gezeigten Stellung liegt der Schlitz 27 am in Fig. 2 rechten Ende des Drehbegrenzungsanschlags 26 an, so dass noch jedes Kragensegment 12 auf eine Freistellung 22 ausgerichtet ist. Die Formhälften 1, 2 haben bereits die Schließstellung erreicht, sind, zweckmäßig, jedoch noch nicht unter Schließdruck verriegelt.

Fig. 3 zeigt die nächstfolgende Phase, in welcher die Stellwelle 16 beispielsweise in Richtung eines Pfeiles 28 so weit verdreht worden ist, dass der Drehbegrenzungsanschlag 26 am anderen Ende des Schlitzes 27 zur Anlage kommt, und jeweils eine Unterbrechung 15 auf eine in Fig. 3 nicht gezeigte Freistellung ausgerichtet ist, während jedes Kragensegment 12 auf der Nutflanke 21 aufliegt. In der Folge werden die Formhälften 1, 2 unter dem Schließdruck verriegelt, so dass auch die Bodenform 7 mit den Formhälften 1, 2 zumindest formschlüssig, zweckmäßig unterstützt durch einen Kraftschluss, verriegelt ist, und die Blasform F nun für einen Herstellungsvorgang eines Behälters bereit ist, für den, zweckmäßig in den Phasen zwischen den Fig. 1 und 2, ein Preform in den Formhohlraum 6 eingebracht wurde.

Nachdem der Behälter hergestellt worden ist, folgt eine Entformungsphase (Fig. 4), für die zunächst die Verriegelung der Formhälften 1, 2 unter dem Schließdruck aufgehoben wird und/oder die weitere Formhälfte 2 gegebenenfalls bereits in Begriff ist, sich von der feststehenden Formhälfte 1 wegzubewegen. Dadurch bleibt zwar zunächst der Formschluss der Kragensegmente 12 mit der Umfangsnut 19 erhalten, jedoch löst sich der Kraftschluss, so dass das Eingriffselement E über die Stellwelle 16 in Fig. 4 in Richtung beispielsweise des Pfeiles 19 verdreht werden kann, bis jedes Kragensegment 12 wieder auf eine Freistellung 22 ausgerichtet ist. Dann wird die Bodenform 7 in Richtung des Pfeiles 30 nach unten und vom Boden des geformten Behälters weg oder gegebenenfalls sogar zusammen mit diesem nach unten gezogen, bis die Kragensegmente 12 aus den Freistellungen 22 ausgetreten sind. Im weiteren Ablauf wird die weitere Formhälfte 2 von der feststehenden Formhälfte 1 wegbewegt und wird der produzierte Behälter entnommen.

Für das Einbringen der Bodenform 7 und ihre Verriegelung und das Entformen sind somit nur lineare Bewegungen in Richtung der Bodenformachse X und relative Drehbewegungen der Eingriffselemente E um die Bodenformachse X erforderlich, was einen relativ einfachen Bewegungsantrieb ermöglicht, und vor allem den Vorteil schafft, den Entformvorgang schon vornehmen zu können, während die weitere Formhälfte 2 noch nicht vollständig wegbewegt ist. Beim Entformen der Bodenform 7 braucht der produzierte Behälter nicht in Querrichtung verlagert zu werden. Dadurch wird in dem Zyklus, der zum Entformen und neuerlichen Beladen der Blasform abläuft, mehr Zeit für die Bewegungen der Bodenform gewonnen, so dass diese Bewegungen langsam ablaufen können, oder wird sogar die Zeit zwischen Produktionszyklen verkürzt, da die einfache Bewegung der Bodenform sehr schnell durchführbar ist.

Bei der gezeigten Ausführungsform weist die Bodenform 7 beispielsweise vier regelmäßig verteilte Kragensegmente 12 auf, und sind in den Formhälften 1, 2 jeweils zwei entsprechend groß ausgelegte Freistellungen 22 vorgesehen. Die Freistellungen 22 befinden sich hierbei im Abstand von der Formtrennebene 5, so dass im verriegelten Zustand ein tragendes Kragensegment 12 die Formtrennebene 5 überbrückt. Alternativ könnte auch jeweils eine Freistellung 22 die Formtrennebene 5 überbrücken. Die Anzahlen der Kragensegmente 12 und Freistellungen 22 könnten verschieden von vier und/oder ungerade sein. In Fig. 1 ist gestrichelt ferner eine Einführschräge 31 bei zumindest einer Freistellung 22 angedeutet, die das leichtere Einführen des Kragensegmentes 12 begünstigt. Als weitere Alternative könnte in der Umfangsnut 19 zumindest ein Drehbegrenzungsanschlag vorgesehen sein, der beispielsweise die korrekte Verriegelungsposition der Kragensegmente 12 festlegt. Diese Drehpositionierung der Kragensegmente 12 könnte bei einer weiteren Alternative auch von dem Bewegungsantrieb 24 bei den Drehbewegungen (Pfeile 28, 29) übernommen werden.

Die Formhälften 1, 2 sind angrenzend an die Gegeneingriffsstruktur G mit Ausnehmungen 25 ausgebildet, in die der Oberteil 10 der Bodenform 7 einbringbar ist. Gegebenenfalls sind die Umfangsnut 19 und jedes Kragensegment 12 so ausgebildet, dass sie eine geringfügige Anzugsschräge haben, so dass bei der Drehbewegung in Richtung des Pfeiles 28 jedes Kragensegment 12 etwas angehoben wird und den Oberteil 10 zusätzlich in die Ausnehmung 25 presst.

Das Bajonettverschluss-Konzept mit den axialen Freistellungen 22 für die Kragensegmente 12 ermöglicht es, unabhängig davon, ob eine feststehende Formhälfte oder nur bewegliche Formhälften vorgesehen sind, die kinematischen Bewegungsabläufe der Formschließung und der linearen Bodenformbewegung voneinander zu trennen bzw. unabhängig zu machen. Denn die Bodenform lässt sich auch dann noch oder relativ langsam einbringen, wenn die Formhälften schon weitestgehend oder vollständig geschlossen sind. Damit ist für die Bodenformbewegung ein größerer und vor allem nicht durch die Formhälften-Bewegungsdauer eingeschränkter Zeitbereich zur Verfügung, was in wichtigen Vorteilen resultiert (z.B. Verschleißminderung).

## Patentansprüche

1. Blasform (F) zum Herstellen von Behältern aus Preforms, mit einer feststehenden Formhälfte (1) und wenigstens einer relativ zur feststehenden Formhälfte (1) zwischen Schließ- und Offenstellungen bewegbaren weiteren Formhälfte (2), einer eine im Wesentlichen zur Bewegungsrichtung der weiteren Formhälfte (2) senkrechte Bodenformachse (X) aufweisenden Bodenform (7), die zwischen einer Eingriffsstellung und einer Entformstellung relativ zu den Formhälften (1, 2) bewegbar ist und in der Eingriffsstellung und Schließstellung der weiteren Formhälfte (2) über wenigstens ein zumindest annähernd zur Bewegungsrichtung der weiteren Formhälfte (2) paralleles, kragenartig nach außen vorspringendes Eingriffselement (E) und eine ringnutartige Gegeneingriffsstruktur (G) in den Formhälften (1, 2) gegen Bewegungen in Bewegungsrichtung der Bodenform (7) mit den Formhälften (1, 2) zumindest formschlüssig verriegelbar ist, und, gegebenenfalls synchronisierten, Bewegungsantrieben (4, 24) für die weitere Formhälfte (2) und die Bodenform (7), **dadurch gekennzeichnet, dass** das Eingriffselement (E) an der Bodenform (7) und zumindest die Gegeneingriffsstruktur (G) in der feststehenden Formhälfte (1) einen Bajonettverschluss (B) bilden, der bei der Bewegung der Bodenform (7) zwischen der Eingriffsstellung und der Entformstellung durch relative Drehbewegungen des Eingriffselementes (E) um die Bodenformachse (X) und nur im Wesentlichen lineare Relativbewegungen in Richtung der Bodenformachse (X) gegenüber zumindest der feststehenden Formhälfte betätigbar ist.

2. Blasform nach Anspruch 1, **dadurch gekennzeichnet, dass** das Eingriffselement (E) und die Gegeneingriffsstruktur (G) auch bei der weiteren Formhälfte (2) einen Bajonettverschluss bilden, der bei in oder weitestgehend in der Schließstellung befindlicher weiterer Formhälfte (2) synchron mit dem Bajonettverschluss in der feststehenden Formhälfte (1) betätigbar ist.

3. Blasform nach Anspruch 1, **dadurch gekennzeichnet, dass** das Eingriffselement (E) an der Bodenform (7) fest angeordnet und zusammen mit der Bodenform (7) relativ zu den Formhälften (1, 2) verdrehbar ist.

4. Blasform nach Anspruch 1, **dadurch gekennzeichnet, dass** das Eingriffselement (E) an der Bodenform (7) relativ zu der Bodenform (7) um die Bodenformachse (X) verdrehbar ist.

5. Blasform nach wenigstens einem der vorhergehenden Ansprüche, **dadurch gekennzeichnet, dass** das Eingriffselement (E) der Bodenform (7) in Umfangsrichtung Unterbrechungen (15) zwischen Kragensegmenten (12) aufweist, und dass in zumindest der feststehenden Formhälfte (1), vorzugsweise auch in der weiteren Formhälfte (2), auf die Größe und den Überstand der Kragensegmente (12) abgestimmte Freistellungen (22) vorgesehen sind, die sich zum Durchführen der Kragensegmente (12) ausgehend von der ringnutartigen Gegeneingriffsstruktur (G) weitgehend linear in Bewegungsrichtung der Bodenform (7) in die oder aus der Entformstellung bis zu einem Ende (23) zumindest der feststehenden Formhälfte (1) erstrecken.

6. Blasform nach Anspruch 5, **dadurch gekennzeichnet, dass** jedes Kragensegment (12) als Prismenringsteg ausgebildet ist, und dass die ringnutartige Gegeneingriffsstruktur (G) eine prismatische Umfangsnut (19) ist, deren zum einen Ende (23) der jeweiligen Formhälfte (1, 2) weisende Nutflanke (21) durch die jeweilige Freistellung (22) unterbrochen ist.

7. Blasform nach Anspruch 4, **dadurch gekennzeichnet, dass** die Kragensegmente (12) in einer Umfangsnut (11) der Bodenform (7), vorzugsweise zwischen einem Unterteil (9) und einem damit verschraubten Oberteil (10) der Bodenform (7), um die Bodenformachse (X) drehbar geführt, vorzugsweise als Teil einer Ringscheibe (15) ausgebildet, und mit einer Stellwelle (16) gekoppelt sind, die im Inneren der Bodenform (7) drehbar gelagert ist und ein unterhalb der Bodenform (7) zugängliches Drehbetätigungsende (17) aufweist, vorzugsweise einen Kurbelarm (18) mit einem Mitnehmer.

8. Blasform nach Anspruch 7, **dadurch gekennzeichnet, dass**, vorzugsweise, in oder innerhalb der Bodenform (7) oder zwischen Unterteil (9) und Oberteil (10) der Bodenform (7), zumindest ein Drehbegrenzungsanschlag (26) für die Drehbewegung der Kragensegmente (12) relativ zur Bodenform (7) vorgesehen ist.

9. Blasform nach wenigstens einem der vorhergehenden Ansprüche, **dadurch gekennzeichnet, dass** pro Formhälfte (1, 2) mindestens zwei Kragensegmente (12) und zwei Freistellungen (22) vorgesehen sind, vorzugsweise mit in etwa untereinander gleichen Umfangsabmessungen, und dass, vorzugsweise, die Freistellungen (22) in jeder Formhälfte (1, 2) in etwa gleich weit von einer Formtrennebene (5) der Formhälften (1, 2) beabstandet sind.

10. Blasform nach Anspruch 5, **dadurch gekennzeichnet, dass** jede Freistellung (22) am einen Ende (23) der Formhälfte (1, 2) eine Einführschräge (31) aufweist.
